# EUROPÄISCHE PATENTSCHRIFT

(11) **EP 2 848 333 B1**
(45) Veröffentlichungstag und Bekanntmachung des Hinweises auf die Patenterteilung: **24.03.2021**
(21) Anmeldenummer: 13184634.7
(22) Anmeldetag: 16.09.2013
(51) Int. Cl.: B22D 15/00, B22D 18/02, B22D 27/04, B22D 27/11, B22D 39/00

(54) **Verfahren und Vorrichtung zur Herstellung eines metallischen Bauteils mittels eines Gieß- und Formwerkzeugs**
Method and device for producing a metallic component by means of a casting and mould
Procédé et dispositif de fabrication d'un composant métallique au moyen d'un outil de coulage et de formage

(43) Veröffentlichungstag der Anmeldung: 18.03.2015
(73) Patentinhaber: Mubea Carbo Tech GmbH, 5020 Salzburg (AT)
(72) Erfinder: Hubauer, Werner, 4911 Tumeltsham (AT)
(74) Vertreter: Oberwalleney, Stephan

(56) Entgegenhaltungen:
- EP-A2- 0 423 447
- DE-A1-102006 036 369
- FR-A1- 2 504 424

## Beschreibung

Die Erfindung betrifft ein Verfahren und eine Vorrichtung zur Herstellung eines metallischen Bauteils mittels eines Gieß- und Formwerkzeugs.

Aus der EP 0 423 447 A2 sind ein Verfahren und eine Vorrichtung zum druckgeregelten Gießen von Metallen, insbesondere Leichtmetallen, bekannt. Dabei ist vorgesehen, dass zunächst Schmelze in das Gießwerkzeug eingefüllt wird, dann das Oberteil zum Verteilen der Schmelze heruntergefahren wird, und anschließend das Metall mit hohem Druck beaufschlagt wird, bis das Bauteil verfestigt ist.

Aus der FR 2 504 424 A1 ist ein Gießverfahren bekannt, bei dem auf die in die Gießform eingefüllte Schmelze während des Erstarrens ein steigender Druck ausgeübt wird.

Aus der DE 10 2006 036 369 A1 ist ein Schmelz-, Gieß- und Pressverfahren zur Herstellung von hochbelasteten Bauteilen bekannt. Hierfür wird Vormaterial in ein geschlossenes System unter Schutzgas eingebracht, aufgeheizt, geschmolzen und quantifiziert. Anschließend wird das Vormaterial über eine Druckkammer in einen Formhohlraum einer Gießform gefördert, wo es unter erhöhtem Druck mit Ausbildung einer Gussgefügestruktur erstarrt. Das Bauteilgefüge wird nach der Erstarrung durch weiter erhöhten Druck bei veränderlichem Formhohlraum zum Fließen gebracht und damit zumindest teilweise in eine Knetgefügestruktur überführt. Nach weiterer Abkühlung und Öffnen der Form wird das Bauteil mit Endabmessungen entnommen.

Aus der DE 38 12 740 A1 ist ein Gieß-Schmiede-Verfahren bekannt, bei dem das Untergesenk sowohl zum Gießen als auch zum Schmieden benutzt wird. Das Untergesenk bildet zusammen mit der oberen Gießformhälfte den Gießhohlraum und zusammen mit dem Obergesenk die Schmiedeform. Mit dem Verfahren sollen sich hochwertige Metallteile mit hoher Formgenauigkeit und hoher Festigkeit schnell und mit geringem maschinellen Einsatz herstellen lassen.

Aus der US 5 729 883 A ist ein Verfahren zur Herstellung eines scheibenförmigen Schmiedeteils als Vorformling für ein Kraftfahrzeugrad aus einer Aluminiumlegierung bekannt. Das Verfahren umfasst die Schritte: Gießen eines Materials in eine vordefinierte Form, und anschließendes Schmieden des Materials zum Schmiedeteil. Dabei beträgt der Umformgrad beim Schmieden nicht weniger als 15 %.

Aus der DE 10 2011 119 643 A1 ist ein Verfahren zur Herstellung eines Rohlings für ein Fahrzeugrad mittels Umformen durch einen Schmiedeprozess bekannt. Dem Schmiedeprozess ist ein Schritt des Gießens vorangestellt, bei dem ein sich in seiner Gestalt vom einfachen Metallzylinder unterscheidender Gussrohling erzeugt wird. Der Gussrohling wird mittels des Schmiedevorgangs in eine endgültige Form gepresst und zum Endrohling umgeformt. Das Gießen kann mittels Schwerkraftguss, Niederdruckguss oder Sandguss erfolgen. Nach dem Schmieden wird das äußere Material des Endrohlings zur Herstellung des Felgenbetts mittels eines Flowformprozesses zum Vorderhorn und Hinterhorn ausgewalzt.

Der vorliegenden Erfindung liegt die Aufgabe zugrunde, ein Verfahren zur Herstellung eines metallischen Bauteils mittels eines Gieß- und Formwerkzeugs vorzuschlagen, das einfach und kostengünstig durchführbar ist und mit dem sich hohe Festigkeiten des fertigen Bauteils erreichen lassen. Die Aufgabe besteht weiter darin, eine entsprechende Vorrichtung vorzuschlagen, die einfach aufgebaut ist und insofern nur geringe Werkzeugkosten nach sich zieht und mit der sich endkonturnahe Bauteile mit guten Festigkeitseigenschaften herstellen lassen.

Die Lösung besteht in einem Verfahren zur Herstellung eines metallischen Bauteils mittels eines Gieß- und Formwerkzeugs den Schritten: Gießen einer Schmelze aus einer Metalllegierung in das Gieß- und Formwerkzeug bei einem ersten Druck (P1), wobei die Schmelze von oben in ein Unterteil des Gieß- und Formwerkzeugs einfüllt wird; Druckbeaufschlagen der erstarrenden Schmelze zwischen dem Unterteil und einem Oberteil des Gieß- und Formwerkzeugs bei einem zweiten Druck (P2), der größer als der erste Druck (P1) ist; und Verdichten des aus der Schmelze zumindest größtenteils erstarrten Bauteils durch relatives Bewegen des Unterteils relativ zum Oberteil bei einem dritten Druck (P3), der größer als der zweite Druck (P2) ist; wobei das Verdichten (S30) mit drittem Druck (P3) erst beginnt, wenn die Schmelze zumindest größtenteils zum Bauteil erstarrt ist, das heißt zumindest in den Bereich zwischen Flüssig- und Festphase übergegangen ist; und wobei das Oberteil während des Gießens und/oder Druckbeaufschlagens auf eine geringere Temperatur eingestellt wird als das Unterteil.

Ein Vorteil besteht darin, dass mit dem Verfahren Bauteile von hoher Festigkeit in kurzer Zeit hergestellt werden können. Dabei trägt das Druckbeaufschlagen nach dem Gießen zu einem feinen Gefüge mit kleinen Kristallen bei. Denn aufgrund des Drucks (P2) beziehungweise durch Relativbewegung des kalten Oberteils in das Unterteil wird im Bereich der Bauteil-Randschale das Kristallwachstum gehemmt beziehungsweise die entstehenden Kristalle werden laufend zu kleineren Kristalle aufgebrochen. Durch das anschließende Verdichten bei höherem Druck (P3) erfolgt ein Fließen des Materials, wobei Poren im Material geschlossen werden und die Entstehung neuer Poren verhindert beziehungsweise minimiert wird. Insgesamt entsteht ein feines Gefüge mit hoher Festigkeit. Das Druckbeaufschlagen kann mit einer Kraft von weniger als 10 kN durchgeführt werden. Zurm Verdichten wird eine Kraft von vorzugsweise mehr als 1.000 kN auf das Werkstück ausgeübt. Ein weiterer Vorteil ist, dass die hergestellten Bauteile durch das Verdichten eine endkonturnahe Form haben, was zu einer hervorragenden Werkstoffausnutzung führt. Weiter weisen die mit dem genannten Verfahren hergestellten Erzeugnisse eine hohe Maßgenauigkeit und Oberflächengüte auf. Die Werkzeugkosten sind gering, da mit einem Werkzeug verschiedene Prozessschritte durchgeführt werden. Das Verfahren eignet sich insbesondere zur Herstellung von Radfelgen für Kraftfahrzeuge, wobei die Herstellung anderer Bauteile selbstverständlich nicht ausgeschlossen ist.

Als Werkstoff zur Herstellung des Werkstücks werden vorzugsweise schmiedefähige Legierungen verwendet, wobei die Verwendung von Gießlegierungen nicht ausgeschlossen ist. Als bevorzugter Werkstoff kommen insbesondere Metalllegierungen aus Leichtmetall wie Aluminium, Magnesium und Titan in Frage.

Nach einer bevorzugten Verfahrensführung erfolgt das Gießen beziehungsweise Einfüllen der Schmelze in den vom Werkzeug gebildeten Formenraum drucklos, das heißt unter Atmosphärendruck (P1) im Formenhohlraum. Dies gilt vorzugsweise für das Verbringen der gesamten Schmelzemenge in den Formenraum des Werkzeugs. Vorzugsweise wird das Oberteil des Gieß- und Formwerkzeugs beim Gießen der Schmelze in einer teilweise geöffneten Position relativ zum Unterteil gehalten. Mit anderen Worten, sind Unterteil und Oberteil während des Gießens noch nicht ganz geschlossen, sondern vorzugsweise so weit aneinander angenähert, dass die Füllhöhe des Metalls in allen Fließkanälen des Unterteils so hoch ist, dass beim nachfolgenden Verdichten und Fließen der Metalllegierung, die auch als Material bezeichnet wird, keine bereits erstarrten Metallfronten aufeinandertreffen.

Das Einfüllen erfolgt aus einem Füllbehälter, beziehungsweise Dosiereinheit, in dem das zur Herstellung des gewünschten Bauteils erforderliche Schmelzevolumen bereitgestellt wird. Der Einfüllvorgang der Schmelze in das Gießwerkzeug, beziehungsweise der erneute Auffüllvorgang des Füllbehälters nach dem Gießen erfolgt vorzugsweise sensorgesteuert. Das Gießen erfolgt vorzugsweise in Form von Schwerkraftgießen, das heißt allein aufgrund der Schwerkraft der Schmelze, aus dem oben liegenden Füllbehälter in das darunter liegende Gießwerkzeug. Niederdruckgießen ist jedoch prinzipiell auch möglich. Es kann ein Filter im Fließverlauf zwischen dem Füllbehälter und dem Gießwerkzeug vorgesehen werden, welcher den Gießfluss verzögert und so zu einem ruhigen beziehungsweise gleichmäßigen Einströmverhalten der Schmelze in das Unterteil führt. Der Filter kann beispielsweise in Form eines Drahtgeflechts aus Stahl gestaltet sein, welcher am unteren Ende des Füllbehälters angeordnet sein kann. Am Auslass des Füllbehälters kann eine Kühlvorrichtung vorgesehen sein, mit der die Schmelze beim Austritt aus dem Füllbehälter gekühlt wird. Hierdurch kann die flüssige Metalllegierung bereits beim Einlaufen in das Unterteil in einen Semi-Solid-Zustand versetzt werden.

Das Gießen der Schmelze in das Gieß- und Formwerkzeug kann unter Schutzgasatmosphäre erfolgen. Durch die Schutzgasatmosphäre wird das Ausbilden einer ungewünschten Oxidschicht während des Gießens verhindert. Die Verwendung von Schutzgas ist abhängig von der zu verarbeitenden Legierung. Bei Legierungen mit geringer Neigung zur Oxidschichtbildung kann auch auf die Verwendung von Schutzgas verzichtet werden.

Nach einer bevorzugten Verfahrensführung werden während und/oder nach dem Gießen Schwingungen in das Gieß- und Formwerkzeug eingeleitet. Hiermit bildet sich eine verbesserte Gefügestruktur mit hoher Festigkeit aus. Durch das Einleiten von Schwingungen bilden sich Korngrenzen früher aus und es entstehen verhältnismäßig kleine Kristalle. Außerdem erfolgt das Einfließen schneller und das Hochsteigen der Schmelze im Unterteil erfolgt gleichmäßig, was sich ebenfalls günstig auf die Gefügestruktur auswirkt.

Vorzugsweise wird zumindest ein Teilbereich des Oberteils auf eine geringere Temperatur eingestellt, als zumindest ein Teilbereich des Unterteils. Dies gilt für das Gießen und/oder Druckbeaufschlagen und/oder Verdichten. Durch die höhere Temperatur bleibt die in das Unterteil einströmende Schmelze längere Zeit in der Flüssigphase als die mit dem Oberteil in Kontakt kommenden Schmelzeteile. Gleichzeitig erfolgt an den kühleren Werkzeugteilen beziehungsweise -bereichen ein schnelles Abschrecken des Materials, was zu einem Gefüge mit hoher Festigkeit führt. Die Erstarrung geht vom Oberteil aus in Richtung Unterteil beziehungsweise Werkstückinneres.

Das Unterteil, oder zumindest Teilbereiche des Unterteils, wird vorzugsweise auf eine Temperatur erhitzt, die Zweidrittel (2/3) der Solidustemperatur der Metalllegierung ± 25% der Solidustemperatur entspricht. Das Erhitzen des Unterteils kann vor dem Gießen beispielsweise in einem Ofen stattfinden. Die Temperaturdifferenz zwischen Oberteil und Unterteil kann während des Gießens beispielsweise mehr als 200 °C betragen.

Zur Herstellung eines rotationssymmetrischen Körpers kann das Unterteil einen Bodenabschnitt und einen ringförmigen Mantelabschnitt aufweisen, wobei der Mantelabschnitt während des Erstarrens und/oder während des Verdichtens vorzugsweise auf eine geringere Temperatur eingestellt wird, als der Bodenabschnitt. Bodenabschnitt und Mantelabschnitt können einteilig ausgebildet sein, oder als separate Teile hergestellt und nachträglich miteinander verbunden werden.

Nach einer bevorzugten Verfahrensführung erfolgt das Druckbeaufschlagen der Schmelze bei einer Bauteil-Randschalen-Temperatur (T2) unterhalb der Liquiduslinie (TL) und/oder oberhalb der Soliduslinie (TS) der Metalllegierung (TS < T2 < TL), wobei der Prozess grundsätzlich auch schon vor Erreichen der Liquiduslinie (TL), beispielsweise bei 3% oberhalb der Liquiduslinie, einsetzen kann. Unter Bauteil-Randschalen-Temperatur wird in diesem Zusammenhang eine Temperatur verstanden, die das Bauteil in einem Randschichtbereich aufweist, beziehungsweise einer aus der Schmelze erstarrenden oder erstarrten Randschale. Die Erstarrung erfolgt von außen nach innen, so dass die Temperaturen des erstarrenden Bauteils im Inneren höher liegen, als in der Randsicht. Das Druckbeaufschlagen wird bei einem zweiten Druck (P2) durchgeführt, der größer ist als der Atmosphärendruck und beispielsweise durch das Eigengewicht des Oberteils auf die Schmelze ausgeübt werden kann. Der Druck führt zu einem Fließen des erstarrenden Materials, weswegen der Prozess auch als Fließpressen bezeichnet werden kann. Vor der Druckbeaufschlagung, respektive zu Beginn der Druckbeaufschlagung, ist das Material noch flüssig. Bei Beendigung der Druckbeaufschlagung ist das Material zumindest teilweise teigig beziehungsweise hat vom Randschalenbereich des Bauteils zum Bauteilinneren verlaufend eine Knetgefügestruktur. Das Druckbeaufschlagen kann unter relativer Bewegung von Oberteil zu Unterteil erfolgen. Für eine schnelle Prozessführung ist es in diesem Fall günstig, wenn das Druckbeaufschlagen bis zum Erreichen eines definierten ersten Abstands der beiden Werkzeugteile zueinander innerhalb einer Zeit von weniger als 10 Sekunden durchgeführt wird. Nach Erreichen dieses ersten Abstands kann eine Haltezeit eingelegt werden, bis die Schmelze größtenteils erstarrt ist beziehungsweise der Semi-Solid-Zustand der Metalllegierung vorliegt.

Beim Verdichten wird das aus der Schmelze zumindest größtenteils erstarrte Bauteil mit erhöhtem Druck (P3) beaufschlagt, der durch relatives Bewegen von Unterteil und Oberteil aufeinander zu aufgebaut wird. Insofern kann das Verdichten auch als Nachpressen bezeichnet werden. Mit zumindest größtenteils erstarrt ist gemeint, dass das Werkstück bereits aus der Flüssigphase so weit abgekühlt ist, dass es zumindest in den Bereich zwischen Flüssig- und Festphase übergegangen ist. Das Material hat in diesem schon teilweise erstarrten Zustand eine Knettextur. Dieser Zustand wird auch als Semi-Solid-Zustand bezeichnet.

Das Verdichten erfolgt vorzugsweise bei einer Bauteil-Randschalen-Temperatur (T3), die geringer ist als die Temperatur der Metalllegierung (T3 < T2). Die untere Grenze der Temperatur (T3) zur Durchführung des Verdichtens liegt vorzugsweise bei der Hälfte der Solidustemperatur (TS) der Metalllegierung (T3 > 0,5TS). Teilbereiche des Bauteils können auch außerhalb der Temperatur (T3) liegen. Während des Verdichtens kann die Temperatur des Bauteils beziehungsweise des Unterteils und/oder Oberteils überwacht werden. Mittels Temperatursensoren, die insbesondere nah der Innenwandung des Gieß- und Formwerkzeug angebracht sind, lassen sich die Temperaturen erfassen. Das Ende des Umformprozesses wird vorzugsweise durch das Erreichen einer Endposition der Relativbewegung Oberteil zu Unterteil und das Erreichen einer bestimmten Temperatur definiert.

Nach einer bevorzugten Verfahrensführung wird das Verdichten so durchgeführt, dass das Bauteil durch das Verdichten, respektive Umformen, einen Umformgrad von weniger als 15 % erfährt, insbesondere von weniger als 10 %, besonders bevorzugt von weniger als 5 %. Durch die verhältnismäßig geringen Umformgrade ist die Umformgeschwindigkeit hoch, was sich insgesamt günstig auf die Herstellungsdauer auswirkt. Das beim Verdichten weiter erstarrende Material bildet aufgrund des schnellen Abkühlens unter Druckbeaufschlagung besonders kleine Kristalle aus, was zu einem hochwertigen Gefüge führt.

Nach einer bevorzugten Verfahrensführung wird das Verdichten durch Bewegen des Unterteils bewerkstelligt, während das Oberteil ortsfest gehalten wird. Es ist jedoch auch grundsätzlich auch die kinematische Umkehr denkbar, das heißt ortsfestes Unterteil und Bewegen des Oberteils. Während des Verdichtens wird der beim Gießen zwischen Unterteil und Oberteil vorhandene Spalt vollständig oder zumindest im Wesentlichen geschlossen. Das noch flüssige oder teigige Material unterhalb der bereits erstarrten Bereiche wird durch das Aufeinanderzubewegen der Werkzeugteile verdichtet, so dass die Bildung von Makro-Lunkern beziehungsweise Micro-Poren verhindert oder zumindest deren Größe und Anzahl vermindert wird. Beim Verdichten können die Erstarrungsporen aus dem Bauteil "herausgepresst" werden, wodurch sich das Volumen des Bauteils entsprechend verkleinert. Dies kann je nach Bauteil und Bauteilbereich zwischen 20 bis 80% der Erstarrungsporen ausmachen. Bei Verwendung einer Aluminiumlegierung kann das Volumen in Bauteilbereichen um mehr als drei Prozent verringert werden. Es entsteht ein porenreduziertes Bauteil mit verbesserten Kennwerten.

Als ein weiterer Verfahrensschritt kann nach dem Verdichten vorgesehen sein: Partielles Nachverdichten des vollständig erstarrten Bauteils, wobei das Nachverdichten durch Einfahren eines Schmiedewerkzeugs in das Unterteil des Gieß- und Formwerkzeugs erfolgt, wobei das Bauteil durch das Schmiedewerkzeug zumindest in Teilbereichen verpresst und dabei plastisch verformt wird.

Beim partiellen Nachverdichten wird das Werkstück mit größeren Kräften beaufschlagt als beim Verdichten. Es entsteht eine schmiedeähnliche Gefügestruktur in den nachverdichteten Bereichen, welche später besonders hohen Belastungen standhalten können. Insofern kann das Nachverdichten auch als Schmiedeprozess bezeichnet werden. Zum Nachverdichten wird das Oberteil des Gieß- und Formwerkzeugs vom Unterteil abgehoben und anschließend wird das Schmiedewerkzeug in das Unterteil eingefahren. Durch das Schmiedewerkzeug werden Teilbereiche des Werkstücks, insbesondere solche, die im Betriebszustand erhöhten Belastungen unterliegen, plastisch verformt und verdichtet. Durch das partielle Schmieden wird in diesen hochbelasteten Bereichen eine Gefügestruktur des Werkstücks mit besonders hoher Festigkeit erreicht. Es sind, je nach gewünschtem Umformgrad beziehungsweise Festigkeit, ein oder mehrere Schmiedestationen möglich. Nach dem Schmieden liegt eine endkonturnahe Form des Werkstücks vor, so dass sich der Aufwand für Nachbearbeitungsschritte wie spanende Fertigungsverfahren reduziert sind.

Das Verdichten und/oder das partielle Nachverdichten wird vorzugsweise so durchgeführt, dass das Bauteil durch das Verdichten und/oder Nachverdichten einen gesamten Umformgrad von weniger als 15 % erfährt, vorzugsweise weniger als 10 %, insbesondere weniger als 5 %. Auf diese Weise ist das Bauteil nah an der gewünschten Endkontur.

Nach dem partiellen Nachverdichten kann als weiterer Verfahrensschritt ein Abstrecken des Bauteils beziehungsweise von Teilbereichen des Bauteils vorgesehen sein. Durch das Abstrecken, was auch als Flowforming bezeichnet wird, lassen sich an dem umgeformten und gegebenenfalls in Teilbereichen nachgeschmiedeten Bauteil Außen- oder Innenkonturen mit Hinterschneidungen erzeugen. Beispielsweise kann der Mantelbereich eines rotationssymmetrischen Werkstücks durch Abstrecken zum Felgenhorn einer Fahrzeugfelge ausgeformt werden.

Nach dem Abstrecken können weitere Verfahrensschritte folgen, insbesondere Entgratung, spanende beziehungsweise mechanische Nachbearbeitung, Qualitätskontrolle wie Röntgen, und/oder Lackieren.

Die oben genannte Aufgabe wird ferner durch eine Vorrichtung zur Herstellung eines metallischen Bauteils gelöst, umfassend: ein Gieß- und Formwerkzeug mit einem Unterteil und einem Oberteil; Einfüllmittel, mit denen eine Schmelze aus einer Metalllegierung von oben in das Unterteil einfüllbar ist; Positioniermittel, mit denen das Unterteil relativ zum Oberteil zumindest während des Gießens einer Metalllegierung in einer definierten Position gehalten werden kann; und eine Kraftbeaufschlagungseinrichtung zum Erzeugen einer Relativbewegung zwischen Unterteil und Oberteil, bei der das aus der Metalllegierung zumindest teilweise erstarrte Bauteil umformbar ist; wobei das Unterteil und das Oberteil mit Kühleinrichtungen und Temperatorsensoren ausgestattet sind, um das Oberteil auf eine geringere Temperatur einzustellen als das Unterteil.

Mit der Vorrichtung lassen sich im Ergebnis dieselben Vorteile erzielen, wie mit dem oben genannten Verfahren, so dass diesbezüglich auf obige Beschreibung Bezug genommen wird.

Das Gieß- und Formwerkzeug, welches auch als Gießform bezeichnet wird, kann nach einem Baukastenprinzip gestaltet sein, um die Rüstzeiten für das Gießen kurz zu halten. Mehrere Gießformen können auf einem drehbaren Rondell angeordnet sein, so dass mehrere Fertigungsstationen durchlaufen werden. Vor dem Gießen können die Gießformen in einer Station auf Prozesstemperatur vorgewärmt werden. Eine Gießform ist vorzugsweise in einer Halte- oder Transportvorrichtung aufgenommen, welche für den Transport mittels Rollen-, Ketten- oder Bandförderern ausgelegt ist. Auch Handhabung mittels Roboter oder Portallader sind zur Beförderung möglich.

Mindestens eines der Teile Unterteil oder Oberteil ist in der Halte- oder Transportvorrichtung nicht vollständig fixiert, sondern lässt sich in einer Achse bewegen. In den beiden anderen Achsrichtungen ist besagtes Teil fixiert. Die Kraftbeaufschlagungseinrichtung ist insbesondere derart gestaltet, dass das Unterteil gegenüber dem Oberteil bewegbar ist, wobei das Oberteil ortsfest gehalten ist. Oberteil und/oder Unterteil können mit Kühlungen und Temperatursensoren ausgestattet sein, welche vorzugsweise nach dem Gießen angeschlossen werden.

Das Unterteil, welches auch als Unterform bezeichnet werden kann, ist vorzugsweise einteilig gestaltet. Es kann jedoch alternativ auch aus mehreren separaten Teilen zusammengesetzt sein, die jedoch während des Fertigungsprozesses nicht voneinander getrennt werden. Vorzugsweise ist das Unterteil rotationssymmetrisch gestaltet. Die Bauhöhe des Unterteils ist insbesondere so ausgeführt, dass dieses - bei geschlossenem Oberteil - die gesamte Flüssigmetallmenge aufzunehmen kann.

Zumindest eines der Teile, Unterteil oder Oberteil, weist Kanäle auf, so dass das entsprechende Teil auf eine definierte Temperatur eingestellt werden kann. Auf diese Weise können das Unterteil und das Oberteil beim Gießen beziehungsweise während des Erstarrens auf unterschiedliche Temperaturen eingestellt werden, was sich günstig auf das Erstarrungsverhalten und damit auf die Gefügestruktur des erstarren Werkstücks auswirkt.

Nach einer bevorzugten Ausführungsform ist zumindest eines der Teile des Gieß- und Formwerkzeugs, das heißt Unterteil und/oder Oberteil, hinterschnittfrei gestaltet. Auf diese Weise wird eine axiale Entnahme ermöglicht. Ein weiterer Vorteil liegt darin, dass das Werkzeug nur zwei Teile benötigt; es kann auf radiale Schieber verzichtet werden.

Vorzugsweise umfasst die Vorrichtung ferner ein Schmiedewerkzeug, das in das Unterteil des Gieß- und Formwerkzeugs einfahrbar ist, wenn das Oberteil vom Unterteil abgenommen ist. Mit dem Schmiedewerkzeug lassen sich Teilbereiche des Werkstücks partiell nachverdichten, was hier zu besonders hohen Festigkeiten führt.

Nach einer bevorzugten Ausgestaltung sind Schwingungsmittel vorgesehen, mit denen Schwingungen in das Gieß- und Formwerkzeug eingeleitet werden können, um eine besonders gute Gefügestruktur zu erreichen. Dies ist insbesondere bei Legierungen mit schlechtem Fließverhalten, wie Alu-Knetlegierungen, von Vorteil.

Nach einer günstigen Weiterbildung ist eine Flüssigmetalldosiereinheit vorgesehen, mit der die Schmelzemenge der in das Gieß- und Formwerkzeug eingebrachten Metallschmelze dosiert wird. Die Dosiereinheit hat vorzugsweise nur unmittelbar vor und während des Gießvorgangs einen Zugang zum Unterteil. Am oder im Füllbehälter ist vorzugsweise ein Temperatursensor vorgesehen, mit dem die Temperatur der Schmelze erfasst werden kann.

Bevorzugte Ausführungsformen werden nachstehend anhand der Zeichnungsfiguren erläutert. Hierin zeigt:
- Figur 1: eine Vorrichtung zur Herstellung eines metallischen Bauteils mit einem Gieß- und Formwerkzeug in einer ersten Ausführungsform im Längsschnitt;
- Figur 2: das Unterteil des Gieß- und Formwerkzeugs aus Figur 1 als Einzelheit im Detail;
- Figur 3: eine Vorrichtung zur Herstellung eines metallischen Bauteils mit einem Gieß- und Formwerkzeug in einer zweiten Ausführungsform im Längsschnitt;
- Figur 4: eine Vorrichtung zur Herstellung eines metallischen Bauteils mit einem Gieß- und Formwerkzeug in einer dritten Ausführungsform im Längsschnitt während des Gießens (S10);
- Figur 5: das Unterteil des Gieß- und Formwerkzeugs aus Figur 4 als Einzelheit im Detail;
- Figur 6: eine Vorrichtung zur Herstellung eines metallischen Bauteils mit einem Gieß- und Formwerkzeug in einer weiteren Ausführungsform im Längsschnitt während des Verdichtens (S30);
- Figur 7: die Vorrichtung gemäß Figur 6 während des partiellen Nachverdichtens (S40), mit abgenommener Oberform und aufgesetztem Schmiedewerkzeug;
- Figur 8: ein erfindungsgemäßes Verfahren zur Herstellung eines metallischen Bauteils mittels eines Gieß- und Formwerkzeugs mit den Verfahrensschritten S10 bis S50; und
- Figur 9: ein Zustandsdiagramm (Phasendiagramm) für eine Metalllegierung zur Herstellung eines Bauteils gemäß dem Verfahren nach Figur 8.

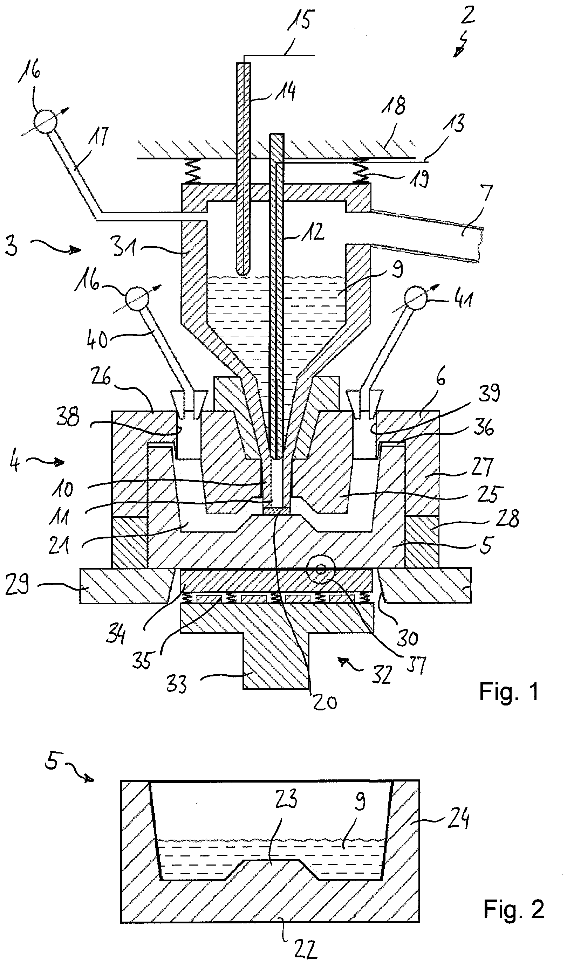

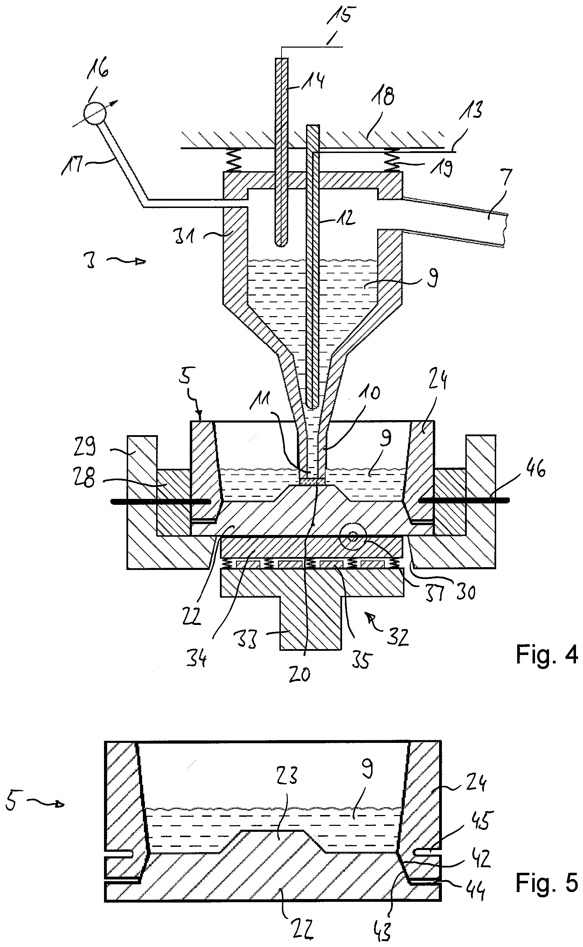

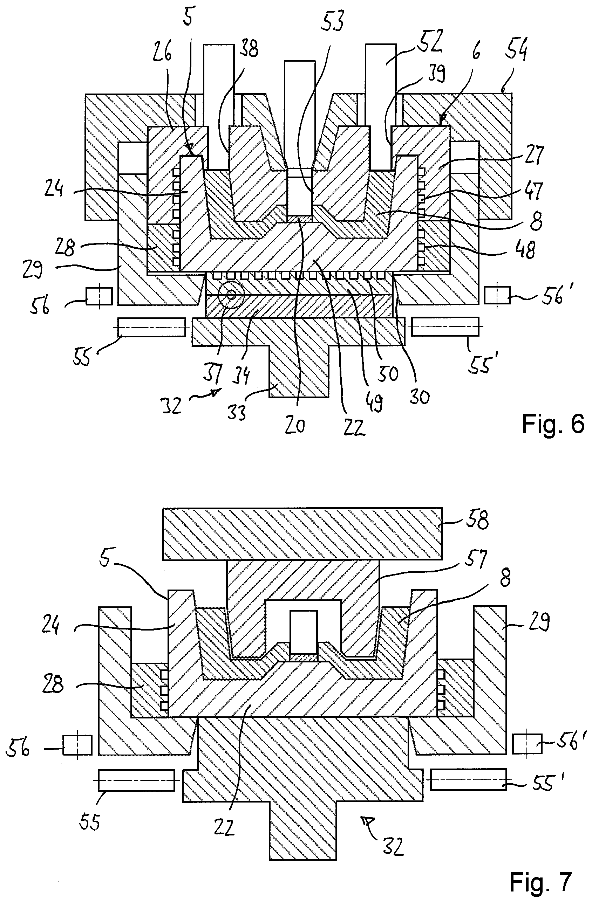

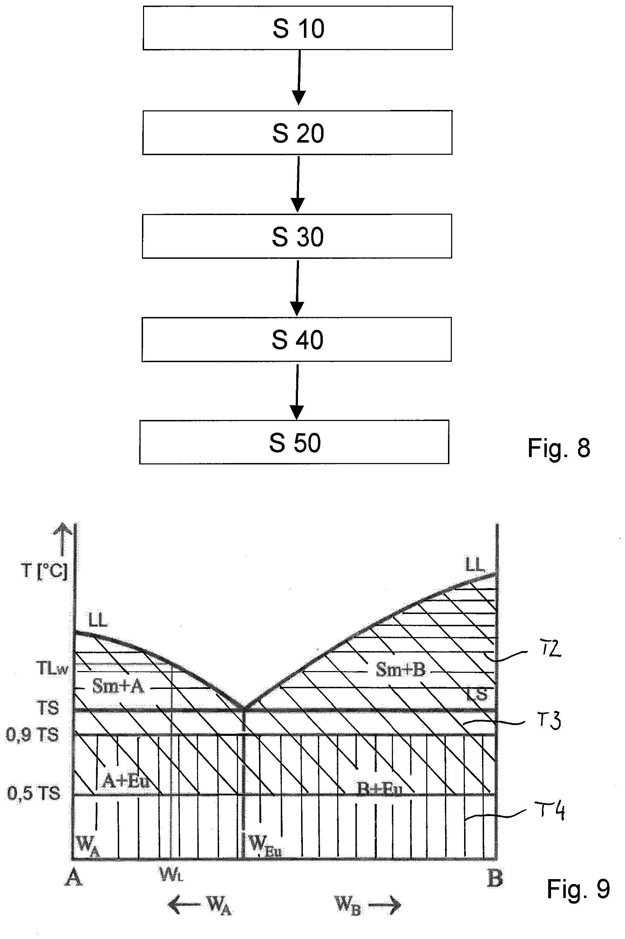

Die Figuren 1 bis 9 werden im Folgenden gemeinsam beschrieben. Es ist in den Figuren 1 bis 4 eine erfindungsgemäße Vorrichtung 2 zur Herstellung eines metallischen Bauteils in einer ersten Ausführungsform gezeigt, in den Figuren 5 und 6 in einer abgewandelten zweiten Ausführungsform. Die Figuren 7 und 8 zeigen ein entsprechendes Verfahren zur Herstellung beziehungsweise ein Zustandsdiagramm (Phasendiagramm) einer für die Herstellung verwendeten Metalllegierung.

Die Vorrichtung 2 umfasst eine Füll- und Dosiereinheit 3 mit einem Dosierbehälter 31 sowie ein Gieß- und Formwerkzeug 4 mit einem Unterteil 5 und einem Oberteil 6. Der Dosiereinheit 3, die zum Dosieren und Einfüllen von flüssigem Metall in das Formwerkzeug 4 dient, ist eine Aufheiz- beziehungsweise Schmelzanlage vorgeschaltet (nicht dargestellt). Aus der Schmelzanlage wird die metallische Schmelze über den Zuführkanal 7 dem Dosierbehälter 31 zugeführt. Figur 1 zeigt den Dosierbehälter 31 mit eingefüllter Schmelze 9 aus flüssigem Metall. Der Dosierbehälter 31 ist trichterförmig gestaltet und hat an seinem unteren Ende ein Angussrohr 10 mit einer Auslassöffnung 11. In dem Dosierbehälter 31 ist ein Ablassventil 12 vorgesehen, mit dem das Angussrohr 10 bedarfsweise geöffnet oder geschlossen werden kann, so dass optional Schmelze aus dem Dosierbehälter in das darunter liegende Gieß- und Formwerkzeug 4 einströmen kann oder das Einströmen unterbrochen wird. Zur Erfassung der Position des Ablassventils 12 ist ein Kontrollsensor 13 vorgesehen, welcher mit einer Steuereinheit zum Ansteuern des Ablassventils 12 in Wirkverbindung steht. Das Ablassventil 12 und die Auslassöffnung 11 können aus Keramik oder Triamet hergestellt sein.

Im Dosierbehälter 31 ist ferner eine Vorrichtung zur Füllstandskontrolle 14 vorgesehen, mit welcher ein den Füllstand repräsentierendes Signal erfasst und an die Steuereinheit weitergegeben wird. Die flüssige Metallmenge kann somit während oder vor der Befüllung gemessen werden. Mit einem Temperatursensor 15 lässt sich ein die Temperatur der Schmelze repräsentierendes Signal ermitteln, welches ebenfalls von der Steuereinheit verarbeitet wird. Die Fülltemperatur in den Behälter 31 liegt idealerweise über der Temperatur, die während des Gießens benötigt wird.

Die Vorrichtung 2 umfasst außerdem eine Schutzgaseinrichtung 16, mit der Schutzgas über eine Zuführleitung 17 in den Dosierbehälter 3 eingeleitet werden kann. Durch Erzeugen einer Schutzgasatmosphäre im Dosierbehälter 3 wird das Ausbilden einer ungewünschten Oxidschicht verhindert. Die Durchführung des Prozesses unter Schutzgasatmosphäre ist optional und kann in Abhängigkeit von der zu verarbeitenden Legierung verwendet werden. Der Dosierbehälter 3 ist gegenüber einem ortsfesten Bauteil 18 mittels Schwingungsmitteln 19 schwingend befestigt, welche beispielsweise eine oder mehrere Federkörper aufweisen können.

Unterhalb der Vorrichtung 3 ist das Gieß- und Formwerkzeug 4 angeordnet, in das die Schmelze bei geöffnetem Ablassventil 12 einströmen kann. An der Austrittsöffnung 11 des Dosierbehälters 3 ist ein Filter 20 angeordnet, der das Einfließen der Schmelze verzögert und ein gleichmäßiges Einströmverhalten in das Unterteil bewirkt. Der Filter, welcher insofern auch als Einströmungsdämpfer bezeichnet werden kann, kann als Drahtgeflecht aus Edelstahl hergestellt sein. Die Befüllung der Gießform 4 beginnt, wenn sich die Temperatur des Flüssigmetalls auf die Gießtemperatur abgekühlt hat.

Das Oberteil 6 ist auf das Unterteil 5 aufgesetzt, wobei die Gießform vor dem Gießen vorzugsweise noch nicht vollständig geschlossen ist . Zwischen den beiden Teilen des Gieß- und Formwerkzeugs 4 ist ein Formhohlraum 21 gebildet, in den die Schmelze einströmen und diesen ausfüllen kann. Vorliegend ist das Gieß- und Formwerkzeug 4 derart gestaltet, dass ein etwa topfförmiger Hohlraum eingeschlossen wird. Hierfür hat das Unterteil 6 einen Bodenabschnitt 22 mit einer zentralen Erhebung 23, die im Bereich der Auslassöffnung 11 angeordnet ist, sowie einen umlaufenden Mantelabschnitt 24. Das Oberteil 6, welches auch als Oberform bezeichnet werden kann, umfasst einen kegelstumpfförmigen Abschnitt 25, einen am oberen Ende daran anschließenden Flanschabschnitt 26 sowie einen umlaufenden Mantelabschnitt 27, welcher das Unterteil 5 seitlich übergreift. Die Innenflächen beziehungsweise Konturen der beiden Formteile 5, 6 sind jeweils hinterschnittfrei gestaltet, so dass ein axiales Entformen des erstarrten Werkstücks 8 ermöglicht wird.

Zwischen dem Oberteil 6 und dem Unterteil 5 sind Positioniermittel 28 angeordnet, mit denen die beiden Werkzeugteile während des Gießens in einer definierten Position, respektive mit einem definierten Abstand relativ zueinander gehalten werden. Die Positioniermittel 28 sind in Form eines Ringkörpers gestaltet, der zwischen einem Grundkörper 29 und dem Unterteil 5 angeordnet ist. Der Grundkörper 29 ist ring- oder rahmenförmig gestaltet mit einer zentralen Öffnung 30. Er dient als Auflager für das Gieß- und Formwerkzeug 4, wobei das Unterteil 5 auf einem die Öffnung 30 umfassenden Rand nach unten hin abgestützt ist und das Oberteil 6 radial außerhalb des Unterteils 5 über den Ringkörper 28 nach unten abgestützt ist.

Die Vorrichtung 2 umfasst ferner eine Kraftbeaufschlagungseinrichtung 32, mit der das Unterteil 5 relativ zum Oberteil 6 bewegt werden kann. Die Kraftbeaufschlagungseinrichtung 32, welche auch als Hub- oder Pressmechanismus bezeichnet werden kann, umfasst einen Hubkörper 33, der relativ zum Grundkörper 29 vertikal verfahrbar ist, und einen Stützkörper 34, der über federnde und/oder dämpfende Lagermittel 35 an dem Hubkörper 33 abgestützt ist. Dabei durchdringt der Hubkörper 33 beziehungsweise der Stützkörper 34 die Durchtrittsöffnung 30 der Grundplatte 29. Durch Anheben des Hubkörpers 33 wird der Stützkörper 34 und die auf dem Stützkörper 33 abgestützte Unterform 5 nach vertikal oben beaufschlagt. Dabei nähert sich die Unterform 5 der Oberform 6 an, welche ortsfest gehalten wird, wobei der zwischen den beiden Formteilen 5, 6 gebildete Spalt 36 zumindest im Wesentlichen geschlossen wird. Durch das Beaufschlagen der Unterform 5 in Richtung Oberform 6 kann das dazwischen angeordnete Werkstück mit einem verdichtet werden, so dass ein feinkörniges porenfreies Gefüge mit einer hohen Festigkeit entsteht. Über schematisch dargestellte Schwingungsmittel 37, welche an der Unterform 5 angeordnet sind, können Schwingungen in das Gieß- und Formwerkzeug eingeleitet werden. Im Oberteil 6 sind ferner Durchbrüche 38, 39 erkennbar, über die eine Leitung 40 der Schutzgaseinrichtung und eine Absaugvorrichtung 41 angeschlossen sind.

Bei der Ausführungsform gemäß Figur 1 ist das Unterteil 5, welches als Einzelheit in Figur 2 dargestellt ist, einteilig gestaltet. Es ist die hinterschnittfreie Gestalt erkennbar, welche eine axiale Entnahme des Werkstücks nach dem vollständigen Erstarren ermöglicht. Das Unterteil 5 ist rotationssymmetrisch gestaltet.

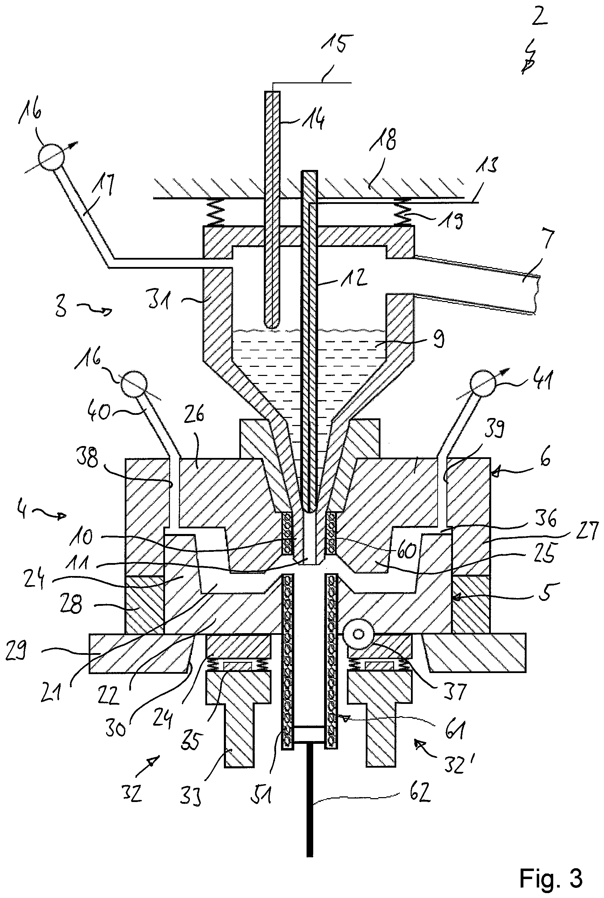

Figur 3 zeigt eine erfindungsgemäße Vorrichtung in einer abgewandelten zweiten Ausführungsform. Diese entspricht weitestgehend der Ausführungsform gemäß Figur 1, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen, wie in Figur 1.

Ein wesentlicher Unterschied der vorliegenden Ausführungsform besteht darin, dass die flüssige Metalllegierung beim Ausfließen aus dem Dosierbehälter 3 in das Formwerkzeug 4 abgekühlt wird. Hierfür ist um das Angussrohr 10 an der Innenwandung der Oberform 6 eine Kühleinrichtung 60 vorgesehen. Ferner ist an der Unterform 5 ein Reservoir 61 vorgesehen, in den die Metalllegierung einfließen kann. Das Reservoir 61 ist von einer Isolier- oder Heizeinrichtung 51 umgeben, welche das Metall auf einer definierten Temperatur beziehungsweise innerhalb eines bestimmten Temperaturbereichs hält. Das Reservoir 61 ist in einem zentralen Bereich der Unterform 5 angesetzt und erstreckt sich nach vertikal unten. Am unteren Ende des Reservoirs 61 ist ein steuerbarer Kolben 62 vorgesehen. Durch Einfahren des Kolbens 62 in dem Reservoir 61, das als Zylinder fungiert, kann in dem Reservoir befindliches Metall in den Formhohlraum 21 gepresst werden.

Die Funktionsweise der vorliegenden Ausführungsform ist wie folgt. Beim Ausfließen der Schmelze 9 wird diese abgekühlt. Dabei ist die Ausfließgeschwindigkeit so gewählt, dass die flüssige Metalllegierung mittels der Kühleinrichtung 60 in einen Semi-Solid-Zustand versetzt wird. Hiermit ist ein Zustand gemeint, bei dem die Temperatur der Legierung um die oder etwas unterhalb der Liquidustemperatur TL liegt. Im Reservoir 61, der auch als Auffangbehälter bezeichnet werden kann, wird die Legierung im oder leicht über dem Semi-Solid-Zustand gehalten, das heißt bei oder knapp oberhalb der Liquidustemperatur TL. Je nach Metalllegierung muss dieser Zustand im Bereich von wenigen Temperaturgraden eingestellt werden. Nach dem vollständigen Auslaufen der Legierung aus dem Dosierbehälter 31 wird der Zulauf geschlossen und der Kolben 62 presst die Legierung im Semi-Solid-Zustand in das Gieß- und Formwerkzeug 4. Dabei ist vorgesehen, dass sich Formteile 5, 6 der Gussform bei Temperaturen eingestellt werden, die mindestens 10 % der Solidustemperatur TS unterhalb der Solidustemperatur liegen. Nach dem Füllen erfolgt das Verdichten des Werkstücks im Gieß- und Formwerkzeug 4 und optional das partielle Nachverdichten.

Im Übrigen entspricht die vorliegende Ausführungsform in Aufbau und Funktionsweise derjenigen gemäß den Figuren 1 und 2, so dass diesbezüglich auf obige Beschreibung verwiesen wird.

Dei Figuren 4 und 5 zeigen eine erfindungsgemäße Vorrichtung in einer weiteren Ausführungsform. Diese entspricht weitestgehend der Ausführungsform gemäß Figur 1, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen, wie in Figur 1.

Ein erster Unterschied gegenüber der Ausführung nach Figur 1 besteht darin, dass das Gießen erfolgt, während die Oberform 6 von der Unterform 5 abgenommen, respektive zu dieser noch beabstandet gehalten ist. Erst nach dem Einfüllen der Schmelze wird die Oberform 6 dann auf die Unterform 5 aufgesetzt, respektive bis auf ein definiertes Abstandsmaß angenähert, und der Prozess wird fortgesetzt, wie im Zusammenhang mit Figur 1 beschrieben.

Eine weitere Besonderheit besteht darin, dass die Unterform 5 vorliegend zweiteilig aufgebaut ist aus einem Bodenabschnitt 22 (Bodenkörper) und einem Mantelabschnitt 24 (Mantelkörper). Bodenabschnitt 22 und Mantelabschnitt 24 haben komplementäre konische Stoßflächen 42, 43, über die die beiden Körper relativ zueinander zentriert und gegeneinander abgestützt sind. Zwischen einer stirnseitigen Endfläche des Mantelabschnitts 24 und einer Radialfläche des Bodenabschnitts 22 ist in aufgesetztem Zustand ein Radialspalt 44 gebildet. In einer Außenumfangsfläche des ringförmigen Mantelabschnitts 24 ist ferner eine Ringnut 45 erkennbar, in die Verriegelungsmittel 46 in Eingriff gebracht werden können, um den Mantelabschnitt 24 gegenüber dem Grundkörper 29 zu fixieren. Der Grundkörper 29 ist vorliegend topfförmig gestaltet mit einem Plattenabschnitt und einem Ringabschnitt. Die Verriegelungsmittel 46 durchdringen den Abstandshalter 28 und sind im Ringabschnitt des Grundkörpers 29 abgestützt. Im Übrigen entspricht die Ausführungsform gemäß den Figuren 3 und 4 in Aufbau und Funktionsweise derjenigen gemäß den Figuren 1 und 2, so dass diesbezüglich auf obige Beschreibung verwiesen wird.

Figur 6 zeigt eine erfindungsgemäße Vorrichtung in einer nochmals abgewandelten dritten Ausführungsform. Diese entspricht weitestgehend der Ausführungsform gemäß Figur 1, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen, wie in Figur 1.

Ein Unterschied gegenüber der Ausführung nach Figur 1 besteht darin, dass der Mantelabschnitt 27 der Oberform 6 und die Positioniereinrichtung 28 jeweils an ihren der Unterform 5 zugewandten Innenflächen Kühleinrichtungen 47, 48 aufweisen. Die Kühleinrichtungen 47, 48 können in Form von Kühlrippen oder Kühlkanälen gestaltet sein, die von einem Kühlfluid durchströmt werden können. Auch der Boden 22 der Unterform 5 wird bei der vorliegenden Ausführungsform gekühlt. Hierfür ist zwischen dem Stützkörper 34 und dem Boden 22 ein scheibenförmiger Zwischenkörper 49 zwischengeschaltet, der an seiner dem Boden 22 zugewandten Oberseite eine Kühleinrichtung 50 in Form von Kühlrippen oder Kühlkanälen aufweist. Die Schwingungseinleitungsmittel 37 sind hier zwischen der Zwischenscheibe 49 und dem Stützkörper 34 angeordnet. Durch die Kühleinrichtungen 47, 48, 50 kann Wärme von dem Unterteil 5 des Gieß- und Formwerkzeugs 4 abgeführt werden, so dass das Werkstück schneller erstarrt.

Die Vorrichtung 2 gemäß Figur 6 ist während, respektive nach dem Verdichten (S30) gezeigt. Hierfür ist das Unterteil 5 mittels der Kraftbeaufschlagungseinrichtung 32 von dem ortsfesten Grundkörper 29, der vorliegend als Stützrahmen mit Boden und Mantelteil gestaltet ist, abgehoben. Dabei hat sich das Unterteil 5 an das Oberteil 6 angehoben, so dass der Spalt 36 geschlossen und das erstarrende Werkstück verdichtet ist. Vor dem Verdichten sind die Durchbrüche 38, 39 verschlossen worden, damit das erstarrende oder bereits erstarrte Material nicht aus dem Formhohlraum herausgedrückt wird. Hierfür sind Schließzylinder 52 vorgesehen, die in die Durchbrüche 38, 39 und die Einlauföffnung 53, einfahren und einen Gegendruck auf die Oberform 6 erzeugen.

Während des Verdichtens stützt sich die Oberform 6 an einem oberen Stützrahmen 54 ab, der ortsfest gehalten ist. Durch die Kraftbeaufschlagungseinrichtung 32 wird der untere Stützrahmen 29 mit allen darauf abgestützten Bauteilen in Richtung des oberen Stützrahmens angehoben. Bei der vorliegenden Ausführungsform sind erste und zweite Transportrollen 55, 56 vorgesehen, mittels denen der untere Stützrahmen vertikal und horizontal geführt ist und linear in Vorschubrichtung bewegt werden kann. Durch das Anheben des Stützrahmens 29 ist in Figur 6 ein Abstand zwischen den Stützrollen 55 und der Unterseite des Stützrahmens 29 gebildet. Spätestens nach dem Verdichten liegt ein vollständig erstarrtes Bauteil 8 vor.

Figur 7 zeigt die Vorrichtung gemäß Figur 6 in einem nachfolgenden Prozessschritt S40. Die Kraftbeaufschlagungseinrichtung 32 ist hier nur schematisch dargestellt. Es ist erkennbar, dass oberer Stützrahmen 54, Schließzylinder 52 und Oberform 6 von der übrigen Baugruppe abgehoben worden sind.

Anstelle der Oberform ist nunmehr ein Schmiedewerkzeug 57 in das Werkstück eingefahren. Mit dem Schmiedewerkzeug 57 werden Teilbereiche des Werkstücks partiell nachverdichtet, was zu besonders hohen Festigkeiten in diesen Teilbereichen führt. Vorliegend hat das Schmiedewerkzeug 57 ein Ringteil mit einer ringförmigen Schmiedefläche 58, welche das Werkstück axial beaufschlagt und dabei verdichtet und plastisch verformt. Das Schmiedewerkzeug 57, welches auch als Matrize bezeichnet werden kann, ist an einer Halterung 58 befestigt und axial abgestützt. Das partielle Nachverdichten wird - wie schon das Verdichten - durch Anheben des unteren Stützrahmens samt Unterform 5 mittels der Hebevorrichtung bewerkstelligt.

Im Übrigen entspricht die Ausführungsform in Aufbau und Funktionsweise derjenigen gemäß Figur 6, so dass diesbezüglich auf obige Beschreibung verwiesen wird.

In Figur 8 ist ein erfindungsgemäßes Verfahren zur Herstellung eines metallischen Bauteils als Ablaufdiagramm mit den Verfahrensschritten S10 bis S50 dargestellt. Als Werkstoff zur Herstellung kann eine schmiedefähige Legierung verwendet werden, um eine Gefügestruktur mit hoher Festigkeit zu erzielen.

Im ersten Verfahrensschritt S10 wird eine Schmelze aus einer Metalllegierung in das Gieß- und Formwerkzeug 4 bei einem ersten Druck (P1) eingegossen, wobei das Einfüllen der gesamten Schmelzemenge drucklos, beziehungsweise unter Atmosphärendruck erfolgt. Die Schmelze wird von oben aus dem Dosierbehälter 31 in das Formwerkzeug 4 eingefüllt. Während des Einfüllens der Schmelze vom Dosierbehälter in die Gießform können Schwingungen in letztere eingeleitet werden. Es ist auch denkbar, dass der Auslauf aus dem Dosierbehälter durch Kühlen und Einstellen der Auslaufgeschwindigkeit derart gesteuert wird, dass das flüssige Metall in einen Semi-Solid-Zustand versetzt wird.

Nachdem die Schmelze vollständig in die Gießform eingebracht ist, werden die Füll- und Dosiereinheit 3 und die Gießform 4 voneinander getrennt und die Schwingungsmittel 37 werden abgeschaltet. Die Gießform 4 kann auf einer Fördereinheit zu einer nächsten Prozessposition bewegt werden.

Im nachfolgenden Verfahrensschritt S20 erfolgt ein Druckbeaufschlagen der im Formhohlraum befindlichen Metalllegierung. Hierfür wird zwischen Unterteil 5 und Oberteil 6 ein Druck P2 aufgebaut, der größer ist als der Atmosphärendruck. Dieser Druck kann beispielsweise durch das Eigengewicht des Oberteils 6 erzeugt werden. Vor dem Druckbeaufschlagen sind alle Öffnungen des Gieß- und Formwerkzeugs 4 zu schließen, damit kein Material ungewünscht aus der Form gepresst wird. Das Druckbeaufschlagen der Schmelze kann in einem Bauteil-Randschalen-Temperaturbereich T2 von um die Liquiduslinie TL bis oberhalb der Soliduslinie TS der Metalllegierung erfolgen, das heißt TS < T2 < TL. Vor der Druckbeaufschlagung ist das Material noch flüssig. Bei Beendigung der Druckbeaufschlagung ist das Material zumindest teilweise teigig.

Das während des Verfahrensschritts 20 fortschreitende Erstarren des Werkstoffs kann durch entsprechende Temperierung des Unterteils 5 und/oder Oberteils 6 bedarfsweise beeinflusst werden. Beispielsweise kann das Unterteil 5 auf eine höhere Temperatur eingestellt werden als das Oberteil 6, an dem dann entsprechend früher eine Erstarrung der Metalllegierung stattfindet. Zum Temperieren, respektive Kühlen, können die Formteile 5, 6 einen oder mehren Kühlkreislauf aufweisen, wobei jedem Kühlkreislauf mindestens ein Temperatursensor zugeordnet ist. Die Kühlung erfolgt mit einem Wasser-Luftgemisch in einem bedarfsgemäßen Verhältnis, um im Werkstück einen gerichteten Erstarrungsverlauf zu gewährleisten.

Nach dem Druckbeaufschlagen (S20) erfolgt im anschließenden Verfahrensschritt S30 ein Verdichten des aus der Schmelze zumindest größtenteils erstarrten Werkstücks. Das Verdichten wird durch relatives Bewegen des Unterteils zum Oberteil bei einem dritten Druck P3 durchgeführt, der größer als der zweite Druck P2 im Verfahrensschritt V20 ist. Das Verdichten erfolgt durch Pressen des Unterteils 5 in Richtung Oberteil 6 mit hohen Kräften. Das Verdichten beginnt vorzugsweise erst, wenn die Metalllegierung zumindest größtenteils erstarrt ist, das heißt aus der Flüssigphase zumindest in den Bereich zwischen Flüssig- und Festphase übergegangen ist, beziehungsweise im Semi-Solid-Zustand ist. Das Verdichten kann bei einer Bauteil-Randschalen-Temperatur T3 erfolgen, die geringer ist als die Temperatur T2 der Metalllegierung beim Verfahrensschritt Druckbeaufschlagen S20. Als untere Grenze der Temperatur T3 wird die Hälfte der Solidustemperatur TS der Metalllegierung angegeben, das heißt T2 > T3 > 0,5TS. Das Ende des Umformprozesses wird durch das Erreichen einer Endposition der Relativbewegung Oberteil zu Unterteil und das Erreichen einer bestimmten Temperatur definiert. Beim Verdichten erfährt das Bauteil nur einen vergleichsweise geringen Umformgrad von weniger als 15 %, insbesondere von weniger als 10 %, respektive 5 %. Beim Verdichten werden Poren im Bauteil geschlossen, so dass die Gefügestruktur verbessert wird.

Als weiterer Verfahrensschritt V40 ist nach dem Verdichten ein Partielles Nachverdichten des vollständig erstarrten Bauteils vorgesehen. Das partielle Nachverdichten wird durch Einfahren eines Schmiedewerkzeugs in das Unterteil des Gieß- und Formwerkzeugs bewerkstelligt, beziehungsweise durch Anheben des Unterteils 5 gegen das Schmiedewerkzeug (Matrize). Hierdurch wird das Bauteil in Teilbereichen verpresst und plastisch verformt. Beim partiellen Nachverdichten wird das Werkstück mit nochmals größeren Kräften beaufschlagt als beim Verdichten. Es entsteht eine schmiedeähnliche Gefügestruktur in den nachverdichteten Bereichen, welche später besonders hohen Belastungen standhalten können.

Nach dem partiellen Nachverdichten (V40) kann in einem weiteren Verfahrensschritt V50 ein Abstrecken von Teilbereichen des Bauteils vorgenommen werden. Durch das Abstrecken lassen sich an dem umgeformten Bauteil Außen- oder Innenkonturen mit Hinterschneidungen erzeugen.

Nach dem Abstrecken können weitere Verfahrensschritte folgen, insbesondere Entgratung, spanende beziehungsweise mechanische Nachbearbeitung, Qualitätskontrolle wie Röntgen, und/oder Lackieren.

Mit dem erfindungsgemäßen Verfahren beziehungsweise Vorrichtung lassen sich Gussrohlinge auf neuartige Weise in mehreren Stufen in derselben Unterform herstellen, durch Gießen (S10), anschießendem Druckbeaufschlagen (S20), nachfolgendem Verdichten/Umformen (S30) und optionaler partieller Materialnachverdichtung (S40). Das Druckbeaufschlagen findet oberhalb der Solidustemperatur (flüssig bis teigiger Zustand) der jeweils verwendeten Legierung statt. Figur 9 zeigt ein Zustandsdiagramm (Phasendiagramm) für eine Metalllegierung zur Herstellung eines Bauteils gemäß dem erfindungsgemäßen Verfahren oder Vorrichtung. Auf der X-Achse ist das Anteilsverhältnis einer Metallegierung (W_{L}) angegeben, die X_{A} % eines Metalls A und X_{B} % eines Metalls B beinhaltet. Auf der Y-Achse ist die Temperatur (T) angegeben. Der Temperaturbereich T2 zum Druckbeaufschlagen, welcher vorzugsweise unterhalb der Liquidustemperatur (TL) und oberhalb der Solidustemperatur TS liegt (TL > T2 > TS), ist in Figur 9 waagerecht schraffiert. In Abhängigkeit der Prozesszeit beim Druckbeaufschlagen (S20) bleibt ein restlicher Umformgrad von weniger als 15% für ein anschließendes Verdichten. Das Verdichten (S30) findet insbesondere in einem Temperaturbereich T3 zwischen der Temperatur T2 und der halben Solidustemperatur 0,5TS statt (T2 > T3 > 0,5 TS). Dieser Bereich ist in Figur 9 von links oben nach rechts unten schraffiert. Optional erfolgt ein partielles Metallnachverdichten (S40) an spannungsexponierten Bauteilpositionen, welche durch das Einfahren einer Matrize von oben erreicht werden kann. Dies erfolgt insbesondere bei einer Temperatur T4 unterhalb von der Temperatur T3 beziehungsweise unterhalb 90% der Solidustemperatur (T3 > T4 < 0,9TS). Dieser Temperaturbereich ist in Figur 9 vertikal schraffiert dargestellt.

Das Verfahren bietet mehr Freiheitsgrade hinsichtlich der Formgebung als bekannte Gießtechniken, da beim Erzeugen des Rohgussteils gießbedingte Querschnitte nicht in dem Ausmaße erforderlich sind. Der gesamte Fertigungsprozess erfolgt in einer einfachen Unterform 5 mit der optionalen Verwendung einer Matrize 57. Die Oberform 6 und die optionale Seitenform haben am Beginn des Fließprozesses deutlich geringere Temperaturen (Temperaturdifferenz bis zu 50% der Solidustemperatur) als die Unterform 5. Durch diesen Fertigungsprozess wird aus einem schnell abgekühlten Gussgefüge ein Gefüge mit Knettextur mit bekanntlich besseren mechanischen Eigenschaften.

### Bezugszeichenliste

- 2: Vorrichtung
- 3: Dosiereinheit
- 4: Gieß- und Formwerkzeug
- 5: Unterteil
- 6: Oberteil
- 7: Zuführkanal
- 8: Bauteil
- 9: Schmelze
- 10: Angussrohr
- 11: Auslassöffnung
- 12: Ablassventils
- 13: Kontrollsensor
- 14: Füllstandskontrolle
- 15: Temperatursensor
- 16: Schutzgaseinrichtung
- 17: Zuführleitung
- 18: Bauteil
- 19: Schwingungsmitteln
- 20: Filter
- 21: Formhohlraum
- 22: Bodenabschnitt
- 23: Erhebung
- 24: Mantelabschnitt
- 25: Abschnitt
- 26: Flanschabschnitt
- 27: Mantelabschnitt
- 28: Positioniermittel
- 29: Grundkörper
- 30: Öffnung
- 31: Füllbehalter
- 32: Kraftbeaufschlagungseinrichtung
- 33: Hubkörper
- 34: Stützkörper
- 35: Lagermittel
- 36: Spalt
- 37: Schwingungsmittel
- 38: Durchbruch
- 39: Durchbruch
- 40: Leitung
- 41: Absaugvorrichtung
- 42: Stoßfläche
- 43: Stoßfläche
- 44: Radialspalt
- 45: Ringnut
- 46: Verriegelungsmittel
- 47: Kühleinrichtung
- 48: Kühleinrichtung
- 49: Zwischenkörper
- 50: Kühleinrichtung
- 51: Isoliereinrichtung
- 52: Schließzylinder
- 53: Einlauföffnung
- 54: Stützrahmen
- 55: Transportrollen
- 56: Transportrollen
- 57: Schmiedewerkzeug
- 58: Halterung
- 60: Kühleinrichtung
- 61: Reservoir
- 62: Kolben

- P: Druck
- S: Verfahrensschritt
- T: Temperatur

## Patentansprüche

1. Verfahren zur Herstellung eines metallischen Bauteils mittels eines Gieß- und Formwerkzeugs mit den Schritten:
Gießen (S10) einer Schmelze (9) aus einer Metalllegierung in das Gieß- und Formwerkzeug (4), wobei die Schmelze von oben in ein Unterteil (5) oder Reservoir (61) des Gieß- und Formwerkzeugs (4) bei einem ersten Druck (P1) eingegossen wird;
Druckbeaufschlagen (S20) der erstarrenden Schmelze zwischen dem Unterteil (5) und einem Oberteil (6) des Gieß- und Formwerkzeugs (4), wobei die erstarrende Schmelze mit einem zweiten Druck (P2) beaufschlagt wird, der größer ist als der erste Druck (P1);
Verdichten (S30) des aus der Schmelze zumindest größtenteils erstarrten Bauteils durch Bewegen des Unterteils (5) relativ zum Oberteil (6), wobei das Bauteil mit einem dritten Druck (P3) beaufschlagt wird, der größer ist als der zweite Druck (P2), und wobei das Verdichten (S30) mit dem dritten Druck (P3) erst beginnt, wenn die Schmelze zumindest größtenteils zum Bauteil erstarrt ist;
**dadurch gekennzeichnet, dass** das Oberteil (6) während des Gießens (S10) und/oder Druckbeaufschlagens (S20) auf eine geringere Temperatur eingestellt wird als das Unterteil (5).

2. Verfahren nach Anspruch 1,
**dadurch gekennzeichnet, dass** das Oberteil (6) des Gieß- und Formwerkzeugs (4) beim Gießen der Schmelze (9) in einer teilweise geöffneten Position relativ zum Unterteil (5) gehalten wird.

3. Verfahren nach Anspruch 1 oder 2,
**dadurch gekennzeichnet,**
**dass** eine Dosiereinheit (3) zum Gießen der Schmelze in das Unterteil (5) vorgesehen ist, wobei die Schmelze während des Gießens (S10) durch eine Kühleinrichtung (60) am Auslass der Dosiereinheit (3) gekühlt wird.

4. Verfahren nach einem der Ansprüche 1 bis 3,
**dadurch gekennzeichnet,**
**dass** das Druckbeaufschlagen (S20) der erstarrenden Schmelze bei einer Bauteil-Randschalen-Temperatur (T2) unterhalb der Liquiduslinie (TL) und oberhalb der Soliduslinie (TS) der Metalllegierung erfolgt.

5. Verfahren nach einem der Ansprüche 1 bis 4,
**dadurch gekennzeichnet,**
**dass** das Verdichten (S30) bei einer Bauteil-Randschalen-Temperatur (T3) erfolgt, die kleiner der Temperatur (T2) ist,
und/oder
die minimal die Hälfte der Solidustemperatur (TS) der Metalllegierung beträgt (T3 > 0,5TS).

6. Verfahren nach einem der Ansprüche 1 bis 5,
**dadurch gekennzeichnet,**
**dass** das Verdichten (S30) durch eine Relativbewegung des Unterteils (5) zum Oberteil (6) bewerkstelligt wird, wobei eines der Formteile des Gieß- und Formwerkzeugs (4) ortsfest gehalten wird.

7. Verfahren nach einem der Ansprüche 1 bis 6,
**dadurch gekennzeichnet,**
**dass** das Oberteil (6) während des Verdichtens (S30) auf eine geringere Temperatur eingestellt wird als das Unterteil (5).

8. Verfahren nach einem der Ansprüche 1 bis 7,
**dadurch gekennzeichnet,**
**dass** das Unterteil (5) einen Bodenabschnitt (22) und einen ringförmigen Mantelabschnitt (24) aufweist, wobei der Mantelabschnitt (24) während des Druckbeaufschlagens (S20) und/oder während des Verdichtens (S30) auf eine geringere Temperatur eingestellt wird, als der Bodenabschnitt (22).

9. Verfahren nach einem der Ansprüche 1 bis 8,
**dadurch gekennzeichnet,**
**dass** als weiterer Verfahrensschritt nach dem Verdichten (S30) vorgesehen ist: Nachverdichten (S40) des vollständig erstarrten Bauteils (8), wobei das Nachverdichten durch Einfahren eines Schmiedewerkzeugs (57) in das Unterteil (5) des Gieß- und Formwerkzeugs (4) erfolgt, wobei das Bauteil durch das Schmiedewerkzeug (57) zumindest in Teilbereichen verpresst und dabei plastisch verformt wird.

10. Verfahren nach einem der Ansprüche 1 bis 9,
**dadurch gekennzeichnet,**
**dass** das Verdichten (S30) und/oder das partielle Nachverdichten (S40) derart durchgeführt wird, dass das Bauteil durch das Verdichten und/oder Nachverdichten einen Umformgrad von weniger als 15 % erfährt.

11. Verfahren nach einem der Ansprüche 1 bis 10,
**dadurch gekennzeichnet,**
**dass** als weiterer Verfahrensschritt nach einem oder dem Nachverdichten (S40) vorgesehen ist:
Abstrecken (S50) des Bauteils zur Erzeugung der Endkontur.

12. Vorrichtung zur Durchführung des Verfahrens zur Herstellung eines metallischen Bauteils nach einem der Ansprüche 1 bis 11, umfassend:
ein Gieß- und Formwerkzeug (4) mit einem Unterteil (5) und einem Oberteil (6),
eine Dosiereinheit (3), mit der eine Schmelze (9) aus einer Metalllegierung von oben in das Unterteil (5) oder Reservoir (61) einfüllbar ist;
Positioniermittel (28), mit denen das Unterteil (5) relativ zum Oberteil (6) zumindest während des Gießens einer Metalllegierung in einer definierten Position gehalten werden kann;
einen Kraftbeaufschlagungseinrichtung (32) zum Erzeugen einer Relativbewegung zwischen Unterteil (5) und Oberteil (6), bei der das aus der Metalllegierung zumindest teilweise erstarrte Bauteil umformbar ist,
**dadurch gekennzeichnet, dass** das Unterteil (5) und das Oberteil (6) mit Kühleinrichtungen und Temperatorsensoren ausgestattet sind, um das Oberteil (6) während des Gießens (S10) und/oder Druckbeaufschlagens (S20) auf eine geringere Temperatur einzustellen als das Unterteil (5).

13. Vorrichtung nach Anspruch 12,
**dadurch gekennzeichnet,**
**dass** zumindest eines der Teile Unterteil (5) und Oberteil (6) des Gieß- und Formwerkzeugs (4) hinterschnittfrei gestaltet ist.

14. Vorrichtung nach Anspruch 12 oder 13,
**dadurch gekennzeichnet,**
**dass** ein Schmiedewerkzeug (57) vorgesehen ist, das in das Unterteil (5) des Gieß- und Formwerkzeugs (4) einfahrbar ist, wenn das Oberteil (6) vom Unterteil (5) entfernt ist.

15. Vorrichtung nach einem der Ansprüche 12 bis 14,
**dadurch gekennzeichnet,**
**dass** der Kraftbeaufschlagungseinrichtung (32) derart gestaltet ist, dass das Unterteil (5) gegenüber dem Oberteil (6) bewegbar ist, wobei das Oberteil (6) ortsfest gehalten ist.

## Claims

1. Method for producing a metal component by a casting and forming tool comprising the steps:
casting (S10) a melt (9) of a metal alloy into the casting and forming-tool (4), wherein the melt is poured from above into a base part (5) or a reservoir (61) of the casting and forming tool (4) at a first pressure (P1),
applying pressure (S20) to the solidifying melt between the base part (5) and an upper part (6) of the casting and forming tool (4), wherein the solidifying melt is pressurized with a second pressure (P2) which is higher than the first pressure (P1),
compressing (S30) the component at least mostly solidified from the melt by moving the base part (5) relative to the upper part (6), wherein the component is compressed with a third pressure (P3), which is higher than the second pressure (P2), and wherein the compressing (S30) with the third pressure (P3) only begins when the melt is at least mostly solidified to form the component,
**characterised in that** the upper part (6) is set to a lower temperature than the base part (5) during the step of applying pressure (S20) and/or compressing (S30).

2. Method according to claim 1,
**characterised in**
**that** the upper part (6) of the casting and forming tool (4) is held in a partially open position relative to the base part (5) during casting of the melt (9).

3. Method according to claim 1 or 2,
**characterised in**
**that** a dosing unit (3) is provided for casting the melt into the base part (5), wherein the melt is cooled during the casting (S10) by a cooling unit (60) at the outlet of the dosing unit (3).

4. Method according to any one of claims 1 to 3,
**characterised in**
**that** the step of applying pressure (S20) to the solidifying melt is carried out at a component-shell-temperature (T2) below a liquidus line (TL) and above a solidus line (TS) of the metal alloy.

5. Method according to any one of claims 1 to 4,
**characterised in**
**that** the compressing (S30) is carried out at a component-shell-temperature (T3), which is lower than the temperature (T2),
and/or
minimal half of the solidus temperature (TS) of the metal alloy (T3 > 0.5TS).

6. Method according to any one of claims 1 to 5,
**characterised in**
**that** the compressing (S30) is carried out by a relative movement of the base part (5) to the upper part (6), wherein one of the form parts of the casting and forming tool (4) is held stationary.

7. Method according to any one of claims 1 to 6,
**characterised in**
**that** the upper part (6) is set to a lower temperature than the base part (5) during the compressing (S30).

8. Method according to any one of claims 1 to 7,
**characterised in**
**that** the base part (5) has a base portion (22) and an annular casing portion (24), wherein the casing portion (24) is set to a lower temperature than the base portion (22) during the step of applying pressure (S20) and/or compressing (S30).

9. Method according to any one of claims 1 to 8,
**characterised in**
**that** after the compressing (S30) it is provided as further method step:
post-compressing (S40) of the completely solidified component (8), wherein the post-compressing is carried out by moving a forging tool (57) into the base part (5) of the casting and forming tool (4), wherein the component is compressed and plastically deformed by the forging tool (57) at least in partial areas.

10. Method according to any one of claims 1 to 9,
**characterised in**
**that** at least one of the step of compressing (S30) and the step of partial post-compressing (S40) is carried out such, that the component is deformed by a degree of deformation of less than 15%.

11. Method according to any one of claims 1 to 10,
**characterised in**
**that** after a or the post-compressing (S40), it is provided as a further step: flow forming (S50) of the component to produce the final contour.

12. Device for carrying out the method for producing a metal component according to any one of claims 1 to 11, comprising:
a casting and forming tool (4) with a base part (5) and an upper part (6),
a dosing unit (3), for filling a melt (9) of a metal alloy from above into the base part (5) or a reservoir (61) of the casting and forming-tool (4),
positioning means (28), by means of which the base part (5) can be held in a defined position relative to the upper part (6) during the casting of a metal alloy into the casting and forming-tool (4),
a force application mechanism (32) for producing a relative movement between the base part (5) and the upper part (6), by which the component at least partially solidified from the metal alloy is deformable.

13. Device according to claim 12,
**characterised in**
**that** at least one of the base part (5) and the upper part (6) of the casting and forming-tool (4) is undercut-free.

14. Device according to claim 12 or 13,
**characterised in**
**that** a forging tool (57) is provided, which is movable into the base part (5) of the casting and forming-tool (4), when the upper part (6) is removed from the base part (5).

15. Device according to one of claims 12 to 14,
**characterised in**
**that** the force application mechanism (32) is configured such, that the base part (5) is movable relative to the upper part (6), wherein the upper part (6) is held stationary.

## Revendications

1. Procédé de fabrication d'un composant métallique au moyen d'un outil de coulage et de moulage, comprenant les étapes suivantes :
coulage (S10) d'une coulée (9) composée d'un alliage métallique dans l'outil de coulage et de moulage (4), la coulée étant coulée par le haut dans une partie inférieure (5) ou un réservoir (61) de l'outil de coulage et de moulage (4) à une première pression (P1) ;
sollicitation par pression (S20) de la coulée solidifiée entre la partie inférieure (5) et une partie supérieure (6) de l'outil de coulage et de moulage (4), la coulée solidifiée étant sollicitée avec une deuxième pression (P2) qui est supérieure à la première pression (P1) ;
compression (S30) du composant du moins en majeure partie solidifié issu de la coulée par déplacement de la pièce inférieure (5) par rapport à la pièce supérieure (6), le composant étant sollicité avec une troisième pression (P3) qui est supérieure à la deuxième pression (P2), et la compression (S30) avec la troisième pression (P3) ne commençant qu'une fois que la coulée est du moins en majeure partie solidifiée en composant ;
**caractérisé en ce que** la pièce supérieure (6) est réglée à une température plus basse que la pièce inférieure (5) pendant le coulage (S10) et/ou la sollicitation par pression (S20).

2. Procédé selon la revendication 1,
**caractérisé en ce**
**que** la partie supérieure (6) de l'outil de coulage et de moulage (4) est, lors du coulage de la coulée (9), maintenue dans une position partiellement ouverte par rapport à la partie inférieure (5).

3. Procédé selon la revendication 1 ou 2,
**caractérisé en ce**
**qu'**une unité de dosage (3) est prévue dans la partie intérieure (5) pour le coulage de la coulée, la coulée étant refroidie pendant le coulage (S10) par un dispositif de refroidissement (60) à la sortie de l'unité de dosage (3).

4. Procédé selon une des revendications 1 à 3,
**caractérisé en ce**
**que** la sollicitation par pression (S20) de la coulée solidifiée a lieu à une température de coque périphérique du composant (T2) en-dessous de la ligne de liquide (TL) et au-dessus de la ligne de solide (TS) de l'alliage métallique.

5. Procédé selon une des revendications 1 à 4,
**caractérisé en ce**
**que** la compression (S30) a lieu à une température de coque périphérique du composant (T3) qui est inférieure à la température (T2),
et/ou
représente au minimum la moitié de la température de solide (TS) de l'alliage métallique (T3 > 0,5TS).

6. Procédé selon une des revendications 1 à 5,
**caractérisé en ce**
**que** la compression (S30) est réalisée par un mouvement relatif de la partie inférieure (5) par rapport à la partie supérieure (6), une des pièces moulées de l'outil de coulage et de moulage (4) étant maintenue à emplacement fixe.

7. Procédé selon une des revendications 1 à 6,
**caractérisé en ce**
**que** la partie supérieure (6), pendant la compression (S30), est réglée à une température plus faible que la partie inférieure (5).

8. Procédé selon une des revendications 1 à 7,
**caractérisé en ce**
**que** la partie inférieure (5) présente une section de fond (22) et une section d'enveloppe de forme annulaire (24), la section d'enveloppe (24) étant, pendant la sollicitation par pression (S20) et/ou pendant la compression (S30), réglée à une température plus faible que la section de fond (22).

9. Procédé selon une des revendications 1 à 8,
**caractérisé en ce**
**qu'**il est prévu comme autre étape opératoire après la compression (S30) :
une recompression (S40) du composant entièrement solidifié (8), la recompression ayant lieu par introduction d'un outil de forge (57) dans la partie inférieure (5) de l'outil de coulage et de moulage (4), le composant étant pressé par l'outil de forge (57) au moins dans des zones partielles et alors déformé plastiquement.

10. Procédé selon une des revendications 1 à 9,
**caractérisé en ce**
**que** la compression (S30) et/ou la recompression partielle (S40) sont réalisés de manière à ce que le composant subisse, suite à la compression et/ou à la recompression, un degré de déformation de moins de 15 %.

11. Procédé selon une des revendications 1 à 10,
**caractérisé en ce**
**qu'**il est prévu comme autre étape opératoire, après une ou la recompression (S40) :
un étirage (S50) du composant pour créer le contour final.

12. Dispositif de réalisation du procédé de fabrication d'un composant métallique selon une des revendications 1 à 11, comprenant :
un outil de coulage et de moulage (4) comportant une partie inférieure (5) et une partie supérieure (6),
une unité de dosage (3) grâce à laquelle une coulée (9) d'alliage métallique peut être versée par le haut dans la partie inférieure (5) ou le réservoir (61) ;
des moyens de positionnement (28) grâce auxquels la partie inférieure (5) peut être maintenue dans une position définie par rapport à la partie supérieure (6) au moins pendant le coulage d'un alliage métallique ;
un dispositif d'application de force (32) pour générer entre la partie inférieure (5) et la partie supérieure (6) un mouvement relatif lors duquel le composant du moins solidifié en alliage métallique est au moins partiellement déformable,
**caractérisé en ce que** la partie inférieure (5) et la partie supérieure (6) sont équipées de dispositifs de refroidissement et de capteurs de température pour régler la pièce supérieure (6), pendant le coulage (S10) et/ou la sollicitation par pression (S20), à une température plus faible que la partie inférieure (5).

13. Dispositif selon la revendication 12,
**caractérisé en ce**
**qu'**au moins une parmi la partie inférieure (5) et la partie supérieure (6) de l'outil de coulage et de moulage (4) est réalisée sans contre-dépouille.

14. Dispositif selon la revendication 12 ou 13,
**caractérisé en ce**
**qu'**il est prévu un outil de forge (57) qui peut être introduit dans la partie inférieure (5) de l'outil de coulage et de moulage (4) lorsque la partie supérieure (6) est retirée de la partie inférieure (5).

15. Dispositif selon une des revendications 12 à 14,
**caractérisé en ce**
**que** le dispositif d'application de force (32) est conçu de manière à ce que la partie inférieure (5) soit mobile par rapport à la partie supérieure (6), la partie supérieure (6) étant maintenue à emplacement fixe.
